# EUROPÄISCHE PATENTANMELDUNG

(11) **EP 1 350 676 A1**
(43) Veröffentlichungstag der Anmeldung: **08.10.2003**
(21) Anmeldenummer: 02007693.1
(22) Anmeldetag: 05.04.2002
(51) Int. Cl.: B60R 9/06, H01Q 1/32

(54) **Satellitenempfangs/sendeeinheit**

(71) Anmelder: ND SatCom AG, 88039 Friedrichshafen (DE)
(72) Erfinder: Neumeyer, Bernhard, Dr., 88090 Immenstaad (DE)
(74) Vertreter: Leson, Thomas Johannes Alois, Dipl.-Ing.

(57) **Zusammenfassung**

Satellitenempfangs/sendeeinheit zum Aufbau einer Satellitenverbindung, wobei die Satellitenempfangs/sendeeinheit (AE) zur Verbindung mit einem Fahrzeug (FZ) vorgesehen und eingerichtet ist. Gemäß der Erfindung ist die Satellitenempfangs/sendeeinheit (AE) auf einer Trägervorrichtung (TR) befestigt, welche zur lösbaren Verbindung mit der an dem Fahrzeug (FZ) vorhandenen Anhängerkupplung (AHK) vorgesehen und eingerichtet ist.

## Beschreibung

Die Erfindung betrifft eine Satellitenempfangs/sendeeinheit zum Aufbau einer Satellitenverbindung gemäß dem Oberbegriff des Patentanspruchs 1.

Bekannte gattungsgemäße Satellitenempfangs/sendeeinheiten sind üblicherweise stationär auf dem Dach eines Fahrzeugs (Sendewagen) installiert. Es ist somit insbesondere für Fernsehsender möglich, am Ort einer Berichterstattung, z.B. bei einer Hauptversammlung oder einer Musikveranstaltung eine Satellitenverbindung aufzubauen, um Daten in Form von Audio- und/oder Videosignale zu übertragen, wodurch z.B. eine Live-TV-Berichterstattung realisiert wird. Ein Problem hierbei ist allerdings, dass die Installation der Einheit an ein Fahrzeug mit einem hohen technischen und kostenintensiven Aufwand verbunden ist. Üblicherweise werden die Einheiten mit einer komplizierten Konstruktion auf dem Dach oder am Heck des Fahrzeugs angebracht. Ein weiteres Problem besteht darin, dass im Falle eines Ausfalls des Fahrzeugs, z.B. aufgrund eines Motorschadens, die Satellitenempfangs/sendeeinheit nicht schnell und einfach abgebaut werden kann.

Es ist somit Aufgabe der Erfindung, eine Satellitenempfangs/sendeeinheit zu schaffen, mit der die Flexibilität beim Einsatz mit einem mobilen Träger erhöht wird.

Diese Aufgabe wird mit der Satellitenempfangs/sendeeinheit gemäß den Merkmalen des Patentanspruchs 1 gelöst. Vorteilhafte Ausführungen der Erfindung sind Gegenstand von Unteransprüchen.

Erfindungsgemäß ist die Satellitenempfangs/sendeeinheit auf einer Trägervorrichtung befestigt, welche zur lösbaren Verbindung mit der an dem Fahrzeug vorhandenen Anhängerkupplung vorgesehen und eingerichtet ist.

Ein Vorteil der erfindungsgemäßen Sateliitenempfangs/sendeeinheit ist, dass sie schnell und einfach montierbar ist. Der Einsatz der Satellitenempfangs/sendeeinheit ist somit nicht auf ein bestimmtes Fahrzeug beschränkt, sondern erstreckt sich auf jedes beliebige Fahrzeug mit Anhängerkupplung. Darüber hinaus ist es mit der erfindungsgemäßen Antenneneinheit nicht mehr nötig, das Fahrzeug kostenintensiv zu modifizieren, z.B. hinsichtlich eines zusätzlichen Dach- oder Heckaufbaus.

Ein weiterer Vorteil ist, dass die erfindungsgemäße Satellitenempfangs/sendeeinheit nahezu betriebsbereit an das jeweilige Fahrzeug anbringbar ist. Nach der hinreichend einfachen Befestigung der Trägervorrichtung, wie es z.B. von an der Anhängerkupplung anbringbaren Fahrradträgern bekannt ist, ist lediglich eine Kabelverbindung zu einem im Fahrzeug untergebrachten Rechner nötig.

Weitere Vorteile und vorteilhafte Ausführungen der Erfindung werden im Folgenden anhand von Zeichnungen näher erläutert. Es zeigen:
- Fig. 1:: eine Heckansicht eines Fahrzeugs mit einer erfindungsgemäßen Satellitenempfangs/sendeeinheit in Transportstellung,
- Fig. 2 :: eine Heckansicht eines Fahrzeugs mit einer erfindungsgemäßen Satellitenempfangs/sendeeinheit in Betriebsstellung.

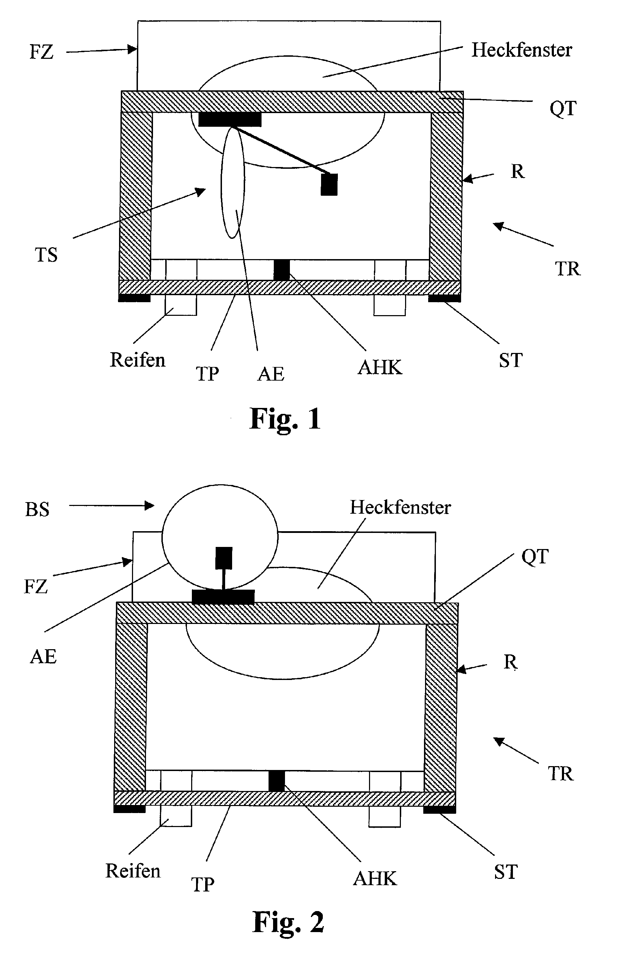

Fig. 1 zeigt in das Heck eines Fahrzeugs mit einer erfindungsgemäßen Satellitenempfangs/sendeeinheit, wobei sich die Satellitenempfangs/sendeeinheit in Transportstellung befindet. Die Satellitenempfangs/sendeeinheit AE ist dabei auf einer Trägervorrichtung TR befestigt, welche mit der Anhängerkupplung AHK des Fahrzeugs FZ verbunden ist. Die Anbringung der Trägervorrichtung TR an die Anhängerkupplung AHK kann z.B. wie aus DE 41 35 859 C2 oder GB 2 273 273 A bekannt, erfolgen.

In einer vorteilhaften Ausführung der Erfindung weist die Trägervorrichtung TR eine Trägerplatte TP auf, welche beim bestimmungsgemäßen Einsatz horizontal ausgerichtet ist. Mit der Trägerplatte TP ist vorteilhaft ein Rahmen R lösbar oder stationär verbunden. Dieser Rahmen R weist einen Querträger QT auf, der zweckmäßig parallel zu der Trägerplatte TP ausgericht ist. An diesem Querträger QT ist die Satellitenempfangs/sendeeinheit AE befestigt. Dabei ist es zweckmäßig, die Satellitenempfangs/sendeeinheit AE drehbar auf dem Querträger QT anzubringen, z.B. mittels einer senkrecht zum Querträger QT verlaufenden Drehachse (nicht eingezeichnet).
In einer vorteilhaften Ausführung ist der Querträger QT schwenkbar, z.B mittels einer parallel zum Querträger QT verlaufenden Drehachse, gelagert. Somit ist es möglich, den Querträger QT mit der daran angebrachten Sateilitenempfangs/sendeeinheit AE von einer Transportstellung TS, wie in Fig. 1 dargestellt, in eine Betriebsstellung BS, wie in Fig. 2 dargestellt, zu bringen.

Vorteilhaft ist der Querträger QT dabei in jeder Stellung TS, BS fixierbar. Der Umbau der Satellitenempfangs/sendeeinheit AE von der Transportstellung TS in die Betriebsstellung BS und umgekehrt kann hierbei mittels manueller oder elektrischer Hilfsmittel erfolgen.

Um für die Trägervorrichtung TR eine zusätzliche Stabilität zu gewährleisten, sind an der Unterseite der Trägerplatte TP wenigstens zwei ausfahrbare Stützen ST vorhanden. Mittels dieser Stützen ST ist es insbesondere möglich, die Trägervorrichtung TR und somit auch die Satellitenempfangs/sendeeinheit AE in der Betriebsstellung BS zu stabilisieren (Fig. 2). Die Stützen ST können dabei entweder mechanisch oder elektrisch ausfahrbar oder klappbar gestaltet sein.

Die Erfindung ist selbstverständlich nicht auf die dargestellte Rahmenkonstruktion beschränkt. So ist es auch möglich, die Rahmenkonstruktion derart zu gestalten, dass sich die Satellitenempfangs/sendeeinheit oberhalb der gedachten Dachebene des Fahrzeugs befindet.

## Patentansprüche

1. Satellitenempfangs/sendeeinheit zum Aufbau einer Satellitenverbindung, wobei die Satellitenempfangs/sendeeinheit (AE) zur Verbindung mit einem Fahrzeug (FZ) vorgesehen und eingerichtet ist, **dadurch gekennzeichnet, dass** die Sateliitenempfangs/sendeeinheit (AE) auf einer Trägervorrichtung (TR) befestigt ist, welche zur lösbaren Verbindung mit der an dem Fahrzeug (FZ) vorhandenen Anhängerkupplung (AHK) vorgesehen und eingerichtet ist.

2. Satellitenempfangs/sendeeinheit nach Anspruch 1, **dadurch gekennzeichnet, dass** die Trägervorrichtung (TR) eine beim bestimmungsgemäßen Einsatz horizontal ausgerichtete Trägerplatte (TP) und einen mit der Trägerplatte (TP) lösbar oder stationär verbundenen Rahmen (R) mit einem Querträger (QT), auf welchem die Satellitenempfangs/sendeeinheit (AE) drehbar befestigt ist, umfaßt.

3. Satellitenempfangs/sendeeinheit nach Anspruch 2, **dadurch gekennzeichnet, dass** der Querträger (QT) mit der Satellitenempfangs/sendeeinheit (AE) von einer Transportstellung (TS) in eine Betriebsstellung (BS) schwenkbar und jeweils fixierbar gelagert ist.

4. Satellitenempfangs/sendeeinheit nach einem der vorangehenden Ansprüche, **dadurch gekennzeichnet, dass** an der Unterseite der Trägerplatte (TP) ausfahrbare Stützen (ST) vorhanden sind, mittels denen die Trägervorrichtung (TR) in der Betriebsstellung (BS) der Satellitenempfangs/sendeeinheit (AE) stabilisiert wird.
